# EUROPEAN PATENT APPLICATION

(11) **EP 4 738 900 A1**
(43) Date of publication of application: **06.05.2026**
(21) Application number: 24306833.5
(22) Date of filing: 31.10.2024
(51) Int. Cl.: H04W 8/18, H04W 8/20

(54) **METHOD IMPLEMENTED IN AN INTEGRATED CIRCUIT MODULE, INTEGRATED CIRCUIT MODULE AND ELECTRONIC DEVICE COMPRISING SAID INTEGRATED CIRCUIT MODULE, COMPUTER PROGRAM AND COMPUTER-READABLE STORAGE MEDIUM**

(71) Applicant: IDEMIA France, 92400 Courbevoie (FR)
(72) Inventor: PUTRANGGONO, Tedy, 92400 Courbevoie (FR)
(74) Representative: Jacobacci & Partners France

(57) **Abstract**

The invention relates to a method implemented in an integrated circuit module (1) having a memory (4) in which are stored an operating system and a database comprising at least one reference identifier associated with a corresponding configuration of the operating system, said method comprising
a step of loading, into the memory of the integrated circuit module, at least a first subscriber profile relative to a communication network and comprising a first identifier,
a step of reading the first identifier,
a step of configuring the operating system in which, if the first identifier is identical to the reference identifier, the operating system is configured according to the corresponding configuration and, if the first identifier is not identical to the reference identifier in the database, the operating system is configured according to a default configuration.

The invention also relates to a corresponding integrated circuit module and to an electronic device (2) comprising said integrated circuit module.

## Description

### Technical Field

The present invention relates to the technical field of telecommunications, and in particular to the field of secure elements involved in the implementation of telecommunications.

The invention concerns a method implemented in an integrated circuit module, an integrated circuit module and an electronic device comprising said integrated circuit module, a computer program and a computer-readable storage medium.

### Technological background

In the field of telecommunications, for instance mobile phone communications, an electronic device, for instance a mobile phone, is allowed to access a mobile network thanks to a Universal Integrated Circuit Card (hereinafter UICC), that contains a mobile network subscriber profile which allows to identify the mobile phone user on the network. A well-known implementation of the UICC is the SIM card (Subscriber Identity Module), which is proper to a mobile network and to a subscriber and which may be inserted removably in a mobile phone.

An evolution of the SIM card is the eUICC (embedded UICC) or eSIM (embedded SIM), embedded in the phone, for instance welded to the circuit board of the mobile phone. Unlike the removable SIM card which contains only one subscriber profile configured once, before being put on sale, to implement the features of mobile operators, the eUICC may be remotely modified at any moment, for example in order to add or delete subscriber profiles.

In order to be compatible with any operator, the eUICC are standardized for a specific profile format. For instance, a well-known profile format is eUICC profile as recommended in the Trusted Compliance Alliance (TCA) document "eUICC Pofile Package Interoperable Format Technical Specification" version 3.3.1, dated July 2023. However, some mobile network operators want to offer subscriber profiles able to implement proprietary features, which may not be supported by some standardized UICC or eUICC.

The incompatibility of standard profiles with proprietary features, which often represents a competitive advantage for the operator, may bother operators from a technical and commercial point of view and deprives users of interesting technical functionalities. In addition, Mobile Network Operators (MNO) and integrated circuit module (e.g. SIM, eUICC, eSIM, etc.) manufacturers have difficulties to adapt products to each other's dedicated proprietary features. Lot of configuration management (e.g. Operating System's configuration) and server updates may occur.

A need to improve compatibility and configuration's managements is then necessary.

### Summary of the invention

Therefore, according to a first aspect of the invention, it is provided a method implemented in an integrated circuit module having a memory in which are stored an operating system and a database comprising at least one reference identifier associated with a corresponding configuration of the operating system, said method comprising
- a step of loading, into the memory of the integrated circuit module, at least a first subscriber profile relative to a communication network and comprising a first identifier,
- a step of reading the first identifier,
- a step of configuring the operating system in which, if the first identifier is identical to the reference identifier, the operating system is configured according to the corresponding configuration and, if the first identifier is not identical to the reference identifier in the database, the operating system is configured according to a default configuration.

Thanks to the invention, it is possible to supply an integrated circuit module, for instance an eUICC, an iSIM (for integrated SIM) or an ieUICC (for integrated eUICC) with a profile having a standard format, for instance TCA format, and still benefit from additional functionalities specific to the profile provider since these functionalities are not comprised in the downloaded profile but implemented locally in the integrated circuit module.

According to an embodiment, a first file (e.g. an elementary file, hereinafter called "EF locks") comprising a sequence of bits whose value is representative of the current configuration of the operating system is stored in the memory of the integrated circuit module (e.g. inside said first subscriber profile) and the step of configuring the operating system comprises a reading of the sequence of bits and a configuration of the operating system according to the value of the sequence of bits.

Configuring the operating system may include storing a sequence of bits in the first file.

According to a first possible embodiment, configuring the operating system includes storing a sequence of bits (corresponding to the resulting configuration) in the first file after the first subscriber profile is loaded into the memory of the integrated circuit module and before receiving a command for enabling the first subscriber profile. The sequence of bits of the first file is thus updated depending on the first identifier at the time of downloading the (first subscriber) profile.

According to a second possible embodiment, configuring the operating system includes storing a sequence of bits (corresponding to the resulting configuration) in the first file after having received a command for enabling the first subscriber profile, and for instance after resetting the integrated circuit module (the resetting being caused e.g. by the integrated circuit module issuing a refresh command after having received the command for enabling the first subscriber profile and having performed actions for switching to the first subscriber profile). The sequence of bits of the first file is thus updated depending on the first identifier at the time of enabling the (previously downloaded) profile.

According to an embodiment, the first identifier comprises a Mobile Country Code (MCC) and a Mobile Network Code (MNC).

According to an embodiment, the method comprises an execution of the configured operating system.

According to an embodiment, the method comprises a step of loading, into the memory of the integrated circuit module, a second subscriber profile relative to another communication network and comprising a second identifier, a step of reading the second identifier and a step of configuring of the operating system in which, if the second identifier is identical to another reference identifier in the database, the operating system is configured according to another corresponding configuration and, if the second identifier is not identical to another reference identifier in the database, the operating system is configured according to the default configuration

According to an embodiment, the first subscriber profile is a TCA type profile.

According to an embodiment, the first identifier is contained in a header of the first subscriber profile.

According to an embodiment, the first identifier is contained in a second file (e.g. an elementary file relating to the subscriber identity) of the first subscriber profile.

According to a second aspect of the invention, it is provided an integrated circuit module having a memory in which are stored an operating system, a database comprising at least one reference identifier associated with a corresponding configuration of the operating system and a code programme comprising instructions relative to the execution of a method comprising:
a step of loading, into the memory of the integrated circuit module, at least a first subscriber profile relative to a communication network and comprising a first identifier,
a step of reading the first identifier,
a step of configuring the operating system in which, if the first subscriber identifier is identical to the reference identifier in the database, the operating system is configured according to the corresponding configuration and, if the first identifier is not identical to the reference identifier in the database, the operating system is configured according to a default configuration.

The invention also provides an electronic device comprising an integrated circuit module defined according to the second aspect of the invention.

The invention also provides a computer program comprising instructions executable by a processor and designed such that the processor performs any of the methods defined above when these instructions are executed by the processor.

The invention also provides a computer-readable storage medium storing instructions executable by a processor and designed such that the processor performs any of the methods defined above when these instructions are executed by the processor.

The various features, variants and embodiments of the invention may be combined with each other in various combinations as long as they are not incompatible or exclusive of each other.

### Brief description of the drawings

Furthermore, various other features of the invention are apparent from the appended description made with reference to the drawings which illustrate non-limiting embodiments of the invention and wherein:
- figure 1 is a diagram illustrating a system configured to implement the method according to the invention,
- figure 2 is a diagram illustrating a method according to an embodiment of the invention,
- figure 3 is a diagram illustrating another method subsequently used in this embodiment of the invention;
- figure 4 is a diagram illustrating a method according to another embodiment of the invention.

It should be noted that in these figures the structural and/or functional elements common to the different variants may have the same references.

### Detailed description

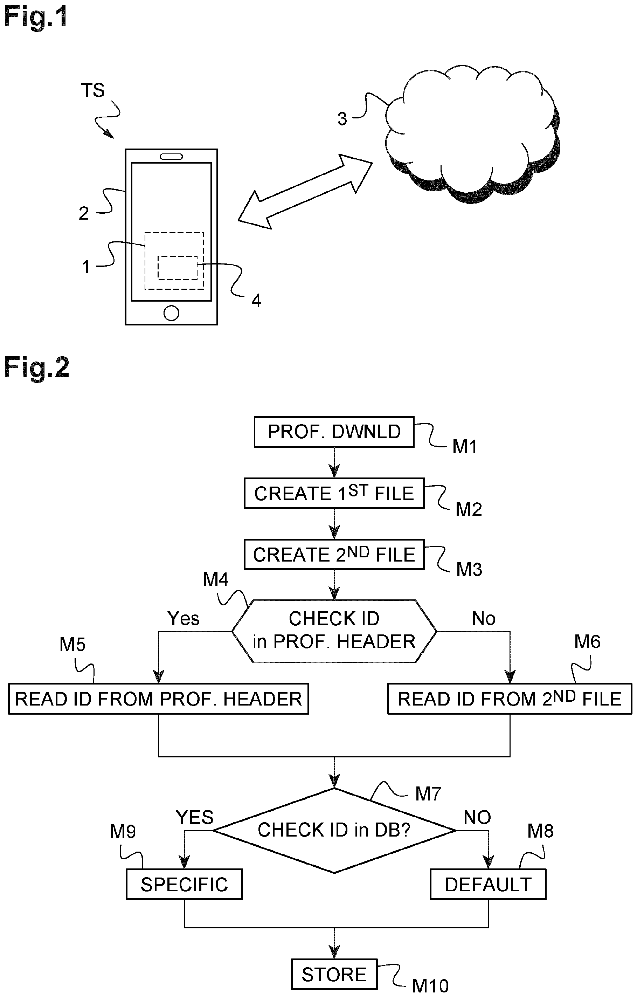

Figure 1 shows a telecommunication system TS configured to implement the method according to the invention. More precisely, the method is implemented by an integrated circuit module 1 of an electronic device 2, for instance here a secure element such as an UICC. Here, the integrated circuit module is an embedded Universal Integrated Circuit Card (eUICC) welded to the circuit board of the electronic device 2. The electronic device 2 is here a mobile communication device 2, such as a smartphone. In this example, the integrated circuit module 1 is part of the mobile communication device 2. The integrated circuit module 1 is configured to exchange data with a telecommunication network 3, here thanks to the mobile communication device 2.

The integrated circuit module 1 comprises a processor (not shown) and a memory 4 (here an Electrically Erasable & Programmable Read Only Memory or EEPROM) configured to store an operating system (not represented) and a database (not represented) comprising at least one reference identifier, here several reference identifiers, each reference identifier being associated with a corresponding expected configuration of the operating system. Here, a first file (e.g. an elementary file, as described for instance in the standard ISO/IEC 7816-4:2020 dated May 2020) comprising a sequence of bits (also called "locks"), whose respective values are used to configure the behaviour of the operating system, is also stored in the memory 4. For instance, each bit of the sequence of bits is representative of the activation/deactivation of a functionality of the operating system. Some examples of such functionalities are the number of concatenated SMS (Short Message Service) that can be receive or send, the implementation of specific (e.g. cryptographic) algorithm, the activation/deactivation of a specific customer feature (such as behaviour when UICC or SIM is busy), Code Division for Multiple Access (CDMA) functionalities etc.

The operating system is configured to, during its execution, check the value of the bits of the sequence of bits in the first file and implements or not specific functionalities according to the values of the bits.

In a possible embodiment, the first file (also called EF locks) is not a standard file (i.e. a file which can be directly included into the loaded profile) but a proprietary file (by proprietary file, we mean a file containing data, data values, information that is at least in part specific to a manufacturer, a company, an OS, a component, a software or hardware element, etc. and necessary for the support and supply of a service, a feature, a functionality by a hardware product). This means that a proprietary file cannot be directly (and completely) part of the loaded profile, which only includes standardized files for the sake of interoperability.

The methods described below are for instance implemented due to the execution of computer program instructions by the processor of the integrated circuit module 1.

In a first step M1 of the method illustrated in figure 2, the integrated circuit module 1 loads, into its memory 4, a first subscriber profile relative to a communication network. The first subscriber profile is associated to a first identifier, here a combination of a Mobile Country Code (MCC, a three decimal digit which identifies a geographical region) and a Mobile Network Code (MNC, a two or three decimal digit which identifies am mobile network operator). For instance, the identifier is located in a header of the subscriber profile during the download of the subscriber profile.

For instance, the integrated circuit module 1 downloads the first subscriber profile through the telecommunication network 3 after having sent a corresponding request to the mobile network operator through said telecommunication network. For instance, the first subscriber profile is a TCA profile ("Trust Connectivity Alliance" profile). By "TCA profile" it shall be understood that the profile shall respect the recommendation mentioned in the TCA document previously mentioned. The profile shall also be in conformity with the recommendations about the content and format as mentioned in the following documents: GSMA SGP.02 "Remote Provisioning Architecture for Embedded UICC - Technical Specification" version 4.3 - dated 25 January 2023 (hereafter SGP.02) or GSMA SGP.22 "RSP Technical Specification" Version 3.1 Final dated 01 December 2023 (hereafter SGP.22).

Then, in a second step M2 of the method, the integrated circuit module 1 creates a first file in the memory 4 to store the sequence of bits (or locks) used to configure the behaviour of the operating system as explained above. The first file is for instance an elementary file (EF) called "EF locks". The first file may be put to a default value (e.g. a null value), or a value mentioned in the TCA profile (as it will anyway be updated in step M10 described below).

In a third step M3 of the method, the integrated circuit module 1 creates a second file in the memory 4 to store profile data (from the downloaded first subscriber profile) that identifies the user of the integrated circuit module 1. Here, the profile data is an International Mobile Subscriber Identity (IMSI), which is a 64 bits field that uniquely identifies the user on the network 3. The second file is for instance an elementary file (EF) and can thus be referenced as EF IMSI. The profile data stored in the second file comprises also the first identifier, here the MCC and the MNC.

In a step M4 of the method, the integrated circuit module 1 checks if the first identifier (combination of MNC and MCC) is present in the profile header of the first subscriber profile. If the first identifier is present in the profile header of the first subscriber profile, then the integrated circuit module reads the value of the first identifier from the profile header of the first subscriber profile (step M5). If the first identifier is not present in the profile header of the first subscriber profile, then the integrated circuit module reads the first identifier from the profile data, e.g. from the second file (step M6).

Then, the integrated circuit module 1 checks (step M7) if the first identifier (here the combination of MNC and MCC) is stored in the database. If the first identifier is not stored in the database or is not associated with a specific expected configuration of the operating system, then the integrated circuit module obtains from the database the values of the sequence of bits corresponding to a default behavior of the operating system (step M8). If the first identifier is stored is the database and is associated with a specific expected configuration of the operating system, then the integrated circuit module obtains the value of the sequence of bits corresponding to the specific behavior of the operating system, i.e. the activation of one or several functionalities (step M9).

In a final step M10 of the method of figure 2, the obtained value of the sequence of bits (or locks), which depends upon the value of the first identifier (i.e. here MNC/MCC combination) because of steps M7, M8 and M9, are stored in the first file (i.e. here in the EF locks).

Once the step M10 is completed, the downloaded first subscriber profile is stored and installed in the memory 4 of the integrated circuit module 1 but is not activated yet. Connectivity may thus be performed using a preexisting subscriber profile until the first subscriber profile is activated (enabled) as now described.

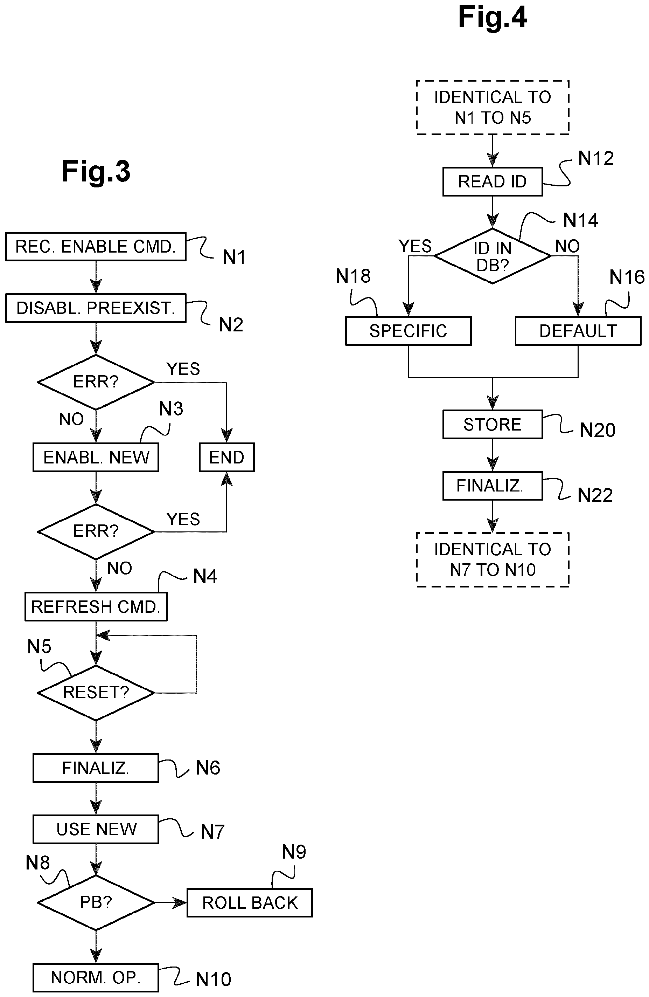

Figure 3 is a diagram illustrating profile switching on the previously described integrated circuit module 1. The steps of figure 3 may thus be performed once a new profile has been downloaded, as just described with reference to figure 2.

In a first step N1 of the method according to this embodiment, the integrated circuit module 1 receives an Enable Command aiming the activation of the new profile, i.e. here the first subscriber profile downloaded in accordance with the method of figure 2. For instance, the Enabled command is sent from a card manager of the mobile communication device 2.

The integrated circuit module 1 thus requests deactivation (disablement) of the preexisting profile (step N2). If an error occurs during the deactivation, then the method ends. The preexisting profile would then stay activated and the new profile would not be activated, in this case.

If no error occurs, then the integrated circuit module 1 thus requests activation (enablement) of the new profile (i.e. here the first subscriber profile) at step N3. If an error occurs during the new profile enabling, the process ends. If no error occurs, then the integrated circuit module 1 sends a refresh command (step N4) to the mobile communication device 2.

The integrated circuit module 1 then waits for the reset to occur (step N5).

In response to the refresh command, the mobile communication device 2 resets the integrated circuit mobile 1 and the integrated circuit mobile 1 thus reboots.

If a profile switch is pending as described here, a flag indicates that the new profile should be finalized. The integrated circuit module 1 thus finalizes at step N6 the new profile (here the first subscriber profile) such that the profile used by the system is this new profile (first subscriber profile).

Thus, in step N7, the operating system uses the new profile (here the first subscriber profile). At some point of operation, this may involve reading a bit of the sequence of bits stored in the first file (EF locks) to determine how the operating system should operate, such that the operating system now operates in accordance with the configuration defined by the sequence of bits stored in the first file during the step M10 described above with reference to figure 2.

If a connectivity problem occurs (step N8), the integrated circuit module 1 may take steps to roll back to the preexisting profile (step N9).

If no connectivity problem occurs at step N8, normal operation continues at step N10 (with the configuration defined by the sequence of bits in the first file as described above at step N7).

Figure 4 describes another method for switching from a preexisting profile to a new profile in accordance with an alternative embodiment of the invention.

In this embodiment, the first subscriber profile is previously downloaded into the memory 4 of the integrated circuit module 1 in a conventional manner (i.e. using steps such as steps M1 to M3 of figure 2, but without using steps such as steps M4 to M10).

The first subscriber profile contains a first file comprising bits (or locks) used to configure the behaviour of the operating system, and a second file relating to the subscriber identity and containing a first identifier (here the combination of MNC and MCC). The first file is for instance an elementary file including lock, or EF locks; the second file is for instance an elementary file containing the IMSI of the subscriber, or EF IMSI.

The memory 4 of the integrated circuit module 1 also includes in the present embodiment a database as described above. This database includes at least a reference identifier, and, associated with this reference identifier, a sequence of bits (or locks) defining a configuration of the operating system. A default sequence of bits, corresponding to a default configuration, is also stored in the database.

The integrated circuit module 1 then receives an enable command and thus proceeds to steps identical to steps N1 to N5 described above with reference to figure 3.

However, in the presently described embodiment, upon reset of the integrated circuit module 1, before (or at the time of) finalizing the new profile, the integrated circuit module 1 implements the following steps.

The integrated circuit module 1 reads at step N12 the first identifier (here the combination of MNC and MCC) from the second file (also called EF IMSI) of the profile.

The integrated circuit module 1 checks if the first identifier (read from the second file) is stored in the database (step N14).

If the first identifier is not stored in the database (as a reference identifier) or is not associated with a specific expected configuration of the operating system, then the integrated circuit module 1 obtains from the database the values of the sequence of bits corresponding to a default behaviour of the operating system (step N16).

If the first identifier is stored is the database (as a reference identifier) and is associated with a specific expected configuration of the operating system, then the integrated circuit module 1 obtains the value of the sequence of bits corresponding to the specific behaviour of the operating system (step N18).

The obtained value of the sequence of bits (or locks), which was read in the database at step N16 or N18, is stored in the first file (i.e. here in the EF locks) at step N20.

The new profile is then finalised in step N22 and the method continues in the same manner as in steps N7 to N10 described above with reference to figure 3.

The invention is not limited by the embodiments described above in connection to figure 1 to 4, and various other modifications may be made to the invention within the scope of the appended claims.

## Claims

1. Method implemented in an integrated circuit module (1) having a memory (4) in which are stored an operating system and a database comprising at least one reference identifier associated with a corresponding configuration of the operating system, said method comprising:
a. a step (M1) of loading, into the memory (4) of the integrated circuit module (1), at least a first subscriber profile relative to a communication network and comprising a first identifier,
b. a step (M5; M6; N12) of reading the first identifier,
c. a step of configuring the operating system in which, if the first identifier is identical to the reference identifier, the operating system is configured (M9; N18) according to the corresponding configuration and, if the first identifier is not identical to the reference identifier in the database, the operating system is configured (M8; N16) according to a default configuration.

2. Method according to claim 1, wherein a first file comprising a sequence of bits whose value is representative of the current configuration of the operating system is stored in the memory (4) of the integrated circuit module (1), and wherein the step (M8,M9, M10) of configuring the operating system comprises a reading of the sequence of bits and a configuration of the operating system according to the value of the sequence of bits.

3. Method according to claim 1, wherein configuring the operating system includes storing (M10) a sequence of bits in a first file after the first subscriber profile is loaded into the memory (4) of the integrated circuit module (1) and before receiving a command for enabling the first subscriber profile.

4. Method according to claim 1, wherein configuring the operating system includes storing (N20) a sequence of bits in a first file after having received a command for enabling the first subscriber profile.

5. Method according to any of claims 1 to 4, wherein the first identifier comprises a Mobile Country Code and a Mobile Network Code.

6. Method according to any of claims 1 to 5, comprising an execution of the configured operating system.

7. Method according to any of claims 1 to 6, comprising a step of loading, into the memory of the integrated circuit module, a second subscriber profile relative to another communication network and comprising a second identifier, a step of reading the second identifier and a step of configuring of the operating system in which, if the second identifier is identical to another reference identifier in the database, the operating system is configured according to another corresponding configuration and, if the second identifier is not identical to another reference identifier in the database, the operating system is configured according to the default configuration

8. Method according to any of claims 1 to 7, wherein the first subscriber profile is a TCA type profile.

9. Method according to any of claims 1 to 8, in which the first identifier is contained in a header of the first subscriber profile.

10. Method according to any of claims 1 to 8, in which the first identifier is contained in a second file of the first subscriber profile.

11. Integrated circuit module having a memory (4) in which are stored an operating system, a database comprising at least one reference identifier associated with a corresponding configuration of the operating system and a code programme comprising instructions relative to the execution of a method comprising:
a. a step (M1) of loading, into the memory (4) of the integrated circuit module, at least a first subscriber profile relative to a communication network and comprising a first identifier,
b. a step (M5; M6; N12) of reading the first identifier,
c. a step of configuring the operating system in which, if the first subscriber identifier is identical to the reference identifier in the database, the operating system is configured (M9; N18) according to the corresponding configuration and, if the first identifier is not identical to the reference identifier in the database, the operating system is configured (M8; N16) according to a default configuration.

12. Integrated circuit module according to claim 11, in which the instructions of the code programme are relative to the execution of the method according to any of claims 2 to 8.

13. Electronic device comprising an integrated circuit module (1) according to claim 11 or 12.

14. Computer program comprising instructions executable by a processor and designed such that the processor performs the method according to any of claims 1 to 10 when these instructions are executed by the processor.

15. A computer-readable storage medium storing instructions executable by a processor and designed such that the processor performs the method according to any of claims 1 to 10 when these instructions are executed by the processor.
